# EUROPÄISCHE PATENTSCHRIFT

(11) **EP 0 337 185 B1**
(45) Veröffentlichungstag und Bekanntmachung des Hinweises auf die Patenterteilung: **31.05.1995**
(21) Anmeldenummer: 89105509.7
(22) Anmeldetag: 29.03.1989
(51) Int. Cl.: G07F 7/10

(54) **Tragbare Datenträgeranordnung**
Portable data carrier assembly
Support de données portatif

(30) Priorität: 11.04.1988 CH 1323/88
(43) Veröffentlichungstag der Anmeldung: 18.10.1989
(73) Patentinhaber: SPA Syspatronic AG, CH-6302 Zug (CH)
(72) Erfinder: Schwartz, Hermann, CH-8808 Pfäffikon (CH)
(74) Vertreter: OK pat AG

(56) Entgegenhaltungen:
- EP-A- 0 152 024
- EP-A- 0 218 176
- EP-A- 0 250 309
- WO-A-87/05420
- DE-A- 3 736 190
- FR-A- 2 592 502
- US-A- 4 734 568

## Beschreibung

Die Erfindung betrifft eine tragbare Datenträgeranordnung, enthaltend eine Steuereinheit und einen Datenspeicher, die je als integrierte Schaltung ausgeführt sind, wobei die Steuereinheit mit Mitteln zur Verbindungsherstellung zu einer externen Schreib- und Leseeinheit versehen ist.

Es sind Datenaustausch- und -verarbeitungssysteme mit einer Vielzahl solcher tragbarer Datenträgeranordnungen bekannt, die von individuellen Benützern nach Bedarf mit einer Schreib- und Leseeinheit in Verbindung gebracht werden, um mit dem System zu kommunizieren. Datenträgeranordnungen der genannten Art, die neben ausreichender Speicherkapazität mit einer Steuereinheit ausgestattet sind, ermöglichen nicht nur einen interaktiven Daten- und Signalaustausch mit dem System, sondern eine dezentralisierte Datenverarbeitung und -speicherung in den individuellen, "intelligenten" Datenträgeranordnungen, wodurch sich äusserst vielfältige und hochentwickelte Anwendungsmöglichkeiten ergeben. Solche Datenträgeranordnungen werden typischerweise in Kartenform (im Kreditkartenformat) mit eingelagerten integrierten Schaltungsbausteinen ausgeführt (sogenannte "Chipkarten"); wenn deshalb nachstehend vorwiegend von Datenträger-"Karten" die Rede ist, sollen jedoch andere Ausgestaltungen keinesfalls ausgeschlossen werden.

Bei fast allen Anwendungen solcher Datenaustauschsysteme ist eine der wichtigsten Voraussetzungen die Sicherheit vor Manipulationen und missbräuchlichem bzw. unbefugtem Zugriff auf gespeicherte und übermittelte Informationen, sowohl bei den "festen" Systemkomponenten wie auch bei den tragbaren Datenträgern. Hohe Sicherheitsanforderungen bestehen bei den letzteren insbesondere wegen ihrer grossen. Verbreitung (Möglichkeit des Verlierens oder Entwendens), aber auch - bei "eingebauter Intelligenz" - wegen der Vielzahl von darin gespeicherten Daten sowie gespeicherten elektronischen Verschlüsselungen, wie sie für den geschützten Datenverkehr mit Schreib- und Leseeinheiten benotigt werden (Identifikations- und Authentikationsfunktionen).

In diesem Zusammenhang ist auch die EP A2 0 152 024 bekannt, bei welcher eine Anordnung offenbart ist, die über einen durch ein Chiffriergerät erzeugten Schlüsselcode die Zugriffsberechtigung überprüft und erst nach Authentifikation und Identifikation einem Benützer Zugang zum System gewährt.
Es wird bei solchen Systemen als besonders nachteilig empfunden, dass die sicherheitsrelevanten Daten ungeschützt im Datenspeicher stehen, wobei lediglich der Zugang und damit der Zugriff zu den Daten sehr erschwert ist.

Aufgabe der vorliegenden Erfindung ist deshalb die Sicherung tragbarer Datenträger der genannten Art gegen Zugriff und Entschlüsselung bzw. Interpretation von darin gespeicherten sicherheitsrelevanten Daten und Informationen durch unbefugte Dritte. Diese Aufgabe wird erfindungsgemäss dadurch gelöst, dass in der genannten Datenträgeranordnung die Ansteuerung des zusätzlichen Datenspeichers von der Steuereinheit her geschützt ist. Das gegeschützte Ansteuern lässt sich - wie weiter unten beschrieben - auf verschiedene Weise durch integrierte kryptografische Schaltungsmittel oder Verfahren verwirklichen. Dadurch wird in den einzelnen Datenträgeranordnungen ein missbräuchlicher Zugriff wirksam verhindert.

Bestimmte geeignete Varianten der Erfindung sind in den Ansprüchen 2 bis 7 angegeben. Besonders ist darauf hinzuweisen, dass die Erfindung unabhängig davon anwendbar ist, ob die integrierten Schaltungen einer Datenträgeranordnung ("Karte") in zwei oder mehrere, durch Leitungen verbundene Bausteine aufgeteilt oder auf einem einzigen Trägger vereint sind (sogenannte multi chip- oder single chip-Ausführung). Die Erfindung ermöglicht also die Ausdehnung der Speicherkapazität auf zusätzliche Chips wie auch die Anwendung komplexerer Chips unter Wahrung der "inneren" Sicherheit der Datenträgeranordnung.

Weitere Merkmale der Erfindung ergeben sich aus der nachstehenden Beschreibung verschiedener Ausführungsbeispiele in Verbindung mit der Zeichnung.

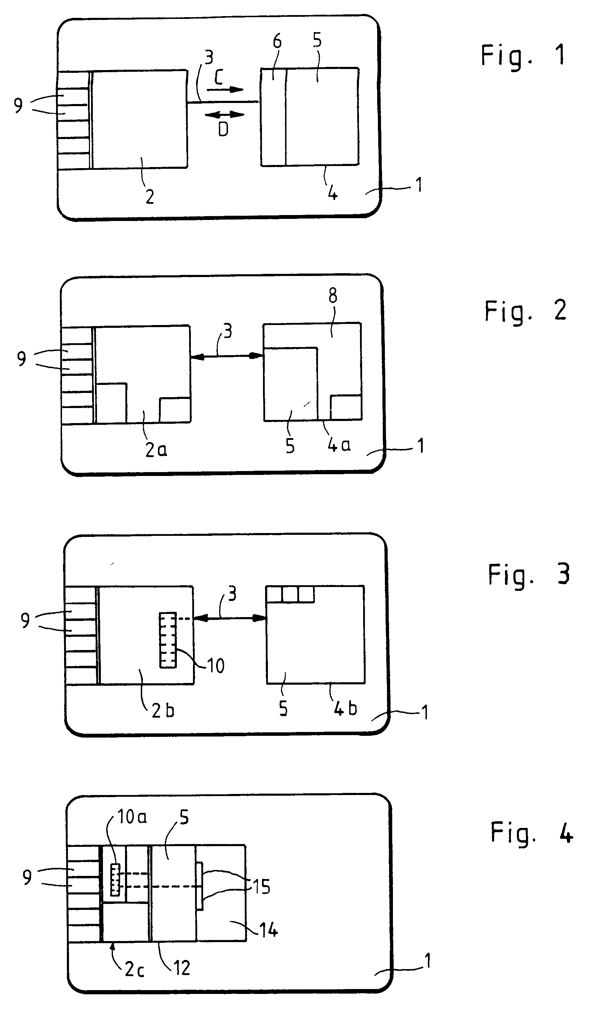

Die Figuren 1 bis 4 sind schematische Darstellungen von Datenträgerkarten, insbesondere Plastikkarten mit eingebetteten integrierten Halbleiterschaltungen ("Chips"), wobei die letzteren in Bezug auf das Kartenformat stark vergrössert und vereinfacht mit darauf angeordneten Schaltungs- bzw. Funktionsbereichen dargestellt sind. Selbstverständlich wird das Layout dieser Schaltungen - Ausdehnung und Gestalt der einzelnen Bereiche - je nach Anwendung verschieden sein.

In Fig. 1 ist als Datenträgeranordnung eine Plastikkarte 1 dargestellt, in welcher zwei integrierte Halbleiter-Schaltungsbausteine ("Chips") 2 und 4 gebettet sind. Der Baustein 2 enthält die Steuereinheit der Datenträgeranordnung und ist zwecks Verbindung zu einer externen, nicht dargestellten Schreib- und Leseeinheit eines Datenaustauschsystems an Aussenkontakte 9 der Karte 1 angeschlossen; die Verbindungsherstellung zur externen Einheit kann auch auf andere Weise als über galvanische Kontakte erfolgen, beispielsweise wie an sich bekannt mittels induktiver Ankopplung usw. Die Steuereinheit 2 enthält vorzugsweise einen Mikroprozessor mit Rechenwerk und RAM- und ROM-Speicherbereichen sowie ferner einen Datenspeicherbereich. Ein zusätzlicher Datenspeicher 5 befindet sich auf dem zweiten Baustein 4. Die Verbindung zwischen den Bausteinen 2 und 4 ist über eine Anzahl Leiterbahnen 3 hergestellt. Aus herstellungstechnischen Gründen kann es zweckmässig sein, die Bausteine 2 und 4 mit den Leiterbahnen 3 und gegebenenfalls Aussenkontakten 9 für den Einbau in die Plastikkarte 1 zu einem gemeinsamen Modul zusammenzufassen.

Eine externe Verbindung kann nur von der Steuereinheit 2 aus über die Kontakte 9 hergestellt werden, wobei ein Austausch sicherheitsrelevanter Daten zwischen Karte und System in an sich bekannter Weise erst nach erfolgreicher Authentikation und Identifikation zustande kommen kann, an welchen Funktionen die Steuereinheit beteiligt ist. Ein Datenaustausch erfolgt jedoch auch "kartenintern" zwischen den Bausteinen 2 und 4 über die Leiterbahnen 3. Um Manipulationen und unbefugten Zugriff zu den Daten im zusätzlichen Datenspeicher 5 zu verhindern, ist die Ansteuerung dieses Speichers von der Steuereinheit 2 her geschützt. Beim Beispiel nach Fig. 1 ist zu diesem Zweck dem Datenspeicher 5 ein Zugriffs-Codebereich 6 zugeordnet, wodurch der Speicher nur über Codesignale C, die von der Steuereinheit 2 erzeugt werden, ansteuerbar ist, d.h. ein Datenaustausch D zwischen den Bausteinen 2 und 4 ist nur nach erfolgter Entschlüsselung über den Codebereich 6 möglich. Auch ein Datenaustausch innerhalb des Bausteins 2 zwischen der Steuereinheit und einem dort vorhandenen Datenspeicher erfolgt, wie nicht weiter dargestellt, auf ähnlich geschützte Weise. Solche geschützten Datenaustausch-Vorgänge erfolgen innerhalb der Datenträgeranordnung 1 gewissermassen autark ohne Beteiligung externer Systemteile (abgesehen natürlich von der Stromversorgung über Kontakte 9). Der Zugriff insbesondere zu sicherheitsrelevanten Daten im Datenspeicher 5 ist somit durch eine Sperre geschützt, welche nur mittels eines innerhalb der Karte verwendeten Schlüsselcodes (key lock) überwunden werden kann. Dabei kann die Sicherheit noch dadurch wesentlich gesteigert werden, dass im Mikroprozessor der Steuereinheit 2 immer neue geheime Zugriffs-Codes generiert werden, z.B. nach jedem erfolgten Zugriff auf den zusätzlichen Datenspeicher.

Zweckmässigerweise werden die Datenspeicher als elektrisch schreib- und löschbare Speicher ausgeführt (sogenannte EEPROM-Speicher). Die Ausführung des zusätzlichen Datenspeichers 5 als serieller Speicher mit Vergleichslogik ermöglicht, mit einer geringen Zahl von Verbindungsleitungen 3 zwischen den Bausteinen 2 und 4 auszukommen.

Beim Ausführungsbeispiel nach Fig. 2 ist der generelle Aufbau der Datenträgerkarte 1 mit integrierten Schaltungsbausteinen 2a, 4a, die über Leiterbahnen 3 verbunden sind, gleich wie bei Fig.1. Die mit Aussenkontakten 9 verbundene Steuereinheit 2a enthält wiederum einen Mikroprozessor und einen Datenspeicher-Bereich. Der Baustein 4a enthält dagegen ausser dem zusätzlichen Datenspeicher 5 ebenfalls einen Mikroprozessor 8, wodurch sich erweiterte Möglichkeiten hinsichtlich Anwendung und Sicherheit ergeben. Mit Hilfe des Mikroprozessors 8 ist es möglich, nicht nur wie bei Fig. 1 die Ansteuerung des Datenspeichers 5 von der Steuereinheit 2 her zu schützen und damit das unbefugte Auslesen von Daten aus dem Speicher 5 zu verhindern, sondern darüber hinaus den gesamten Datenaustausch über die Leitungen 3 zu sichern, d.h. in codierter oder verschlüsselter Form durchzuführen. Die beidseitige Ansteuerung ist jeweils nur nach erfolgreicher gegenseitiger kryptografischer Authentikation möglich, die wiederum nur "kartenintern", d.h. ohne Beteiligung externer Systemteile erfolgt.

Der generelle Aufbau beim Beispiel nach Fig. 3 mit Steuereinheit 2b und zusätzlichem Datenspeicher 4b in Form von separaten integrierten Schaltungen entspricht wiederum den vorangehenden Beispielen. Eine geschützte Ansteuerung des zusätzlichen Datenspeichers 5 wird hier indessen nochmals auf eine andere Weise verwirklicht, nämlich dadurch, dass der Mikrocode der Steuereinheit 2b, durch 10 angedeutet, geheim ist. Es kann zwar in der Steuereinheit 2b ein an sich bekannter Mikroprozessor verwendet werden, welcher jedoch auf einem "unüblichen", nur dem Hersteller bekannten und damit geheimen Mikrocode 10 beruht. Dadurch wird ein unbefugter Zugriff auf im Datenträger gespeicherte Daten bzw. die Entschlüsselung von über die Leitungen 3 ausgetauschten Informationen verunmöglicht, auch wenn es gelingen sollte, die Leiterbahnen 3 freizulegen.

Im Gegensatz zu den vorangehend beschriebenen Ausführungsbeispielen enthält die Datenträgeranordnung bzw. die Plastikkarte 1 nach Fig. 4 einen einzigen Halbleiterbaustein 12, auf welchem die Steuereinheit 2c, der zusätzliche Datenspeicher 5 sowie weitere Schaltungsbereiche insgesamt in integrierter Schaltungsbauweise ausgeführt sind. Aehnlich wie beim Beispiel nach Fig. 3 ist im Mikroprozessor der Steuereinheit 2c der Mikrocode 10a geheim, so dass die Ansteuerung des zusätzlichen Datenspeichers 5 wiederum geschützt ist (ein "mechanischer" Zugriff auf Leitungen zwischen Bereichen der integrierten Schaltung auf einem und demselben Träger wäre natürlich noch erheblich schwieriger als auf Leitungen 3, welche innerhalb der Plastikkarte 1 verlegt sind bzw. innerhalb eines Moduls, welcher zwei getrennte Bausteine 2 und 4 umfasst).

Mit dem Rechenwerk im Mikroprozessor der Steuereinheit 2c steht ferner ein zusätzliches Rechenwerk 14 mit Registern 15 in Verbindung, die ebenfalls auf dem Träger 12 angeordnet sind. Wie angedeutet, sind die Register 15 ebenfalls auf den geheimen Mikrocode 10a der Steuereinheit 2c ausgerichtet, d.h. der Signalaustausch zwischen der Steuereinheit 2c und dem zusätzlichen Rechenwerk 14 erfolgt ebenfalls aufgrund des geheimen Codes. Ein solches zusätzliches Rechenwerk 14 ermöglicht die Durchführung besonders hochentwickelter kryptografischer Verfahren innerhalb der tragbaren Datenträgeranordnung, d.h. ohne Beanspruchung externer Rechenkapazität und dadurch bedingtem Datenaustausch mit externen Systemteilen. Dies bedeutet, dass die Anwendung des geheimen Mikrocodes 10a auf die integrierte Schaltung des einzigen Trägers 12 in der Datenträgeranordnung beschränkt bleibt, wodurch eine extreme Sicherheit vor Manipulation und unbefugtem Zugriff erzielt wird.

## Patentansprüche

1. Tragbare Datenträgeranordnung, enthaltend eine Steuereinheit und einen Datenspeicher, die je als integrierte Schaltung ausgeführt sind, wobei die Steuereinheit mit Mitteln zur Verbindungsherstellung zu einer externen Schreib- und Leseeinheit versehen ist, dadurch gekennzeichnet, dass ein zusätzlicher Datenspeicher (5) vorgesehen ist, dessen Ansteuerung von der Steuereinheit (2) her autark durch eine Codierung geschützt ist.

2. Tragbare Datenträgeranordnung nach Anspruch 1, dadurch gekennzeichnet, dass der Datenspeicher (5) einen Zugriffs-Codebereich (6) enthält und über von der Steuereinheit (2) erzeugte Codesignale (C) ansteuerbar ist.

3. Tragbare Datenträgeranordnung nach Anspruch 1, dadurch gekennzeichnet, dass dem Datenspeicher (5) ein Prozessor (8) zum gesicherten (codierten oder verschlüsselten) Datenaustausch mit der Steuereinheit (2a) zugeordnet ist.

4. Tragbare Datenträgeranordnung nach Anspruch 1, dadurch gekennzeichnet, dass der Mikrocode (10) der Steuereinheit (2b) geheim ist.

5. Tragbare Datenträgeranordnung nach Anspruch 1, dadurch gekennzeichnet, dass mit dem Rechenwerk der Steuereinheit (2c) ein zusätzliches Rechenwerk (14) in Verbindung steht, dessen Register (15) auf den Mikrocode (10a) der Steuereinheit (2c) ausgerichtet ist bzw. sind.

6. Tragbare Datenträgeranordnung nach einem der vorangehenden Ansprüche, dadurch gekennzeichnet, dass Steuereinheit und zusätzlicher Datenspeicher als separate integrierte Schaltungen (2, 4) ausgeführt sind, welche durch Leiterbahnen (3) innerhalb der Datenträgeranordnung (1) miteinander verbunden sind.

7. Tragbare Datenträgeranordnung nach einem der Ansprüche 1 bis 5, dadurch gekennzeichnet, dass Steuereinheit (2), zusätzlicher Datenspeicher (5) samt weiteren Bereichen (6, 8, 14, 15) insgesamt in integrierter Schaltungsbauweise auf demselben Träger (12) ausgeführt sind.

## Claims

1. A portable data carrier arrangement containing a control unit and a data memory which are each constructed as an integrated circuit, wherein the control unit is provided with means for making connection to an external write and read unit, characterised in that an additional data memory (5) is provided, the activation of which by the control unit (2) is protected in a self-sufficient manner by a code.

2. A portable data carrier arrangement according to claim 1, characterised in that the memory (5) contains an access code area (6) and can be activated via code signals (C) generated by the control unit (2).

3. A portable data carrier arrangement according to claim 1, characterised in that a processor (8) for protected (coded or encrypted) data exchange with the control unit (2a) is associated with the data memory (5).

4. A portable data carrier arrangement according to claim 1, characterised in that the micro-code (10) of the control unit (2b) is secret.

5. A portable data carrier arrangement according to claim 1, characterised in that an additional arithmetic unit (14) is connected to the arithmetic unit of the control unit (2c), the register or registers (15) of which additional arithmetic unit is or are adjusted to the micro-code (10a) of the control unit (2c).

6. A portable data carrier arrangement according to any one of the preceding claims, characterised in that the control unit and the additional data memory are constructed as separate integrated circuits (2, 4) which are connected to each other by strip conductors (3) within the data carrier arrangement (1).

7. A portable data carrier arrangement according to any one of claims 1 to 5, characterised in that the control unit (2) and the additional data memory (5), together with further areas (6, 8, 14, 15), are constructed as a whole in the mode of construction of an integrated circuit on the same carrier (12).

## Revendications

1. Agencement porte-données portable, contenant une unité de commande et une mémoire de données qui sont réalisées chacune sous forme d'une circuit intégré, I'unité de commande étant pourvue de moyens permettant de réaliser une liaison avec une unité extérieure de saisie et de lecture, caractérisé en ce qu'il est prévu une mémoire de données (5) supplémentaire dont l'action de commande par l'unité de commande (2) est protégée d'une manière autonome au moyen d'un codage.

2. Agencement porte-données portable selon la revendication 1, caractérisé en ce que la mémoire de données (5) contient une zone de code d'accès (6) et est agencée de façon à pouvoir être commandée par l'intermédiaire de signaux de code (C) produits par l'unité de commande (2).

3. Agencement porte-données portable selon la revendication 1, caractérisé en ce qu'il est associé à la mémoire de données (5) un processeur (8) permettant un échange de données avec l'unité de commande (2a) qui est protégé (codé ou verrouillé).

4. Agencement porte-données portable selon la revendication 1, caractérisé en ce que le microcode (10) de l'unité de commande (2b) est secret.

5. Agencement porte-données portable selon la revendication 1, caractérisé en ce que l'unité de calcul de l'unité de commande (2c) est reliée à une unité de calcul (14) supplémentaire dont un ou des registres (15) est ou sont adaptés au microcode (10a) de l'unité de commande (2c).

6. Agencement porte-données portable selon l'une des revendications précédentes, caractérisé en ce que l'unité de commande et la mémoire de données supplémentaire sont réalisées sous la forme de circuits intégrés (2, 4) séparés qui sont reliés entre eux par des pistes conductrices (3) à l'intérieur de l'agencement porte-données (1).

7. Agencement porte-données portable selon l'une des revendications 1 à 5, caractérisé en ce que l'unité de commande (2), la mémoire de données (5) supplémentaire et la totalité des autres zones (6, 8, 14, 15) sont réalisées ensemble, sous forme de circuit intégré, sur le même support (12).
